# EUROPEAN PATENT SPECIFICATION

(11) **EP 3 614 410 B1**
(45) Date of publication and mention of the grant of the patent: **20.03.2024**
(21) Application number: 19189300.7
(22) Date of filing: 01.10.2015
(51) Int. Cl.: H01H 9/02, H01H 9/16, H01H 71/00

(54) **PROGRAMMABLE SWITCH**
PROGRAMMIERBARER SCHALTER
COMMUTATEUR PROGRAMMABLE

(30) Priority: 10.10.2014 IT TO20140812
(43) Date of publication of application: 26.02.2020
(62) Divisional of application: 15187964.0
(73) Proprietor: Finder S.P.A., 10040 Almese (TO) (IT)
(72) Inventor: LA ROTONDA, Remo, 10028 Trofarello (TO) (IT)
(74) Representative: Robba, Pierpaolo

(56) References cited:
- EP-A2- 2 642 588
- WO-A2-2013/003804
- CN-U- 202 261 429
- US-A- 5 982 103
- US-A1- 2012 287 003
- US-A1- 2013 169 504
- US-A1- 2013 229 319
- US-A1- 2014 170 971
- US-A1- 2014 293 529
- US-B2- 7 362 285

## Description

### Technical Field

The present invention relates to a programmable switch for use in electrical equipments.

Preferably, though not exclusively, the invention relates to time switches or astronomical switches, timers, chronothermostats and the like, and the following description shall refer especially to this application.

### Prior Art

In the field of programmable switches it is known to use joysticks and displays for programming the switches upon their installation.

The known programmable switches allow to program, for instance, the switching on-off time of utilities connected thereto, for example of lighting devices, and to program variation thereof depending on the date or other parameters.

However, the devices of the aforementioned kind have some drawbacks.

One drawback is that the programming interface or the display may be difficult to access, thus making it little easy for the installing personnel to handle them during programming of the switch.

A further drawback lies in the fact that the programming step takes a long time for manually inputting data, thus making it difficult to input numerous data or data which change their value quickly over time.

These drawbacks are usually overcome by using programmable keys, which, once they are introduced into a suitable slot of the product, transfer thereto a setting and a programming previously stored in the key.

In order to effect such programming it is necessary to use a programming device, which in turn has to be connected to a PC or tablet though a USB or wireless connection.

Both the programmable switches providing for a manual loading of data and those programmable by key have some limitations.

A first limitation is posed by the fact that the switch needs be powered, either by power network or by battery, during the programming.

Another limitation is given by the impossibility, for these switches, to have a traceability and an automated data collection of the product (e.g. the place of installation, the time of installation, any changes of the set program, the time remaining until the expected life end of the product and/or of its battery), or at least the data can only be collected through documental recording by the installer.

US 2014170971 describes a system and a method for supplying information to and/or obtaining information from an electronic component programmable by means of an NFC interface provided with memory. WO 2013/003804 describes a method for programming a load control device using a smartphone through an NFC interface. These systems and method, however, are not free from errors when it comes to providing a user with information about the status of the current setting implemented in the component through the NFC interface.

### Summary of the Invention

It is an object of the present invention to provide a programmable switch having an NFC chip allowing setting and programming thereof by means of a mobile device (smartphone o tablet) equipped with NFC connection and dedicated APP.

Another object of the present invention is to allow recording, on a database managed by said dedicated APP, of the data referred to the switch, by storing localization data, serial number, installation date, any re-programmings, thus allowing to make a "history" of the programmable switch available to the manufacturing company, such history being usable for purposes of activation and product warranty check, traceability, maintenance forecasting (for instance for replacing the back-up battery) etc.

A further object of the present invention is to allow easy, quick and safe programming of the switch at the time of manufacturing and product inspection.

A further object of the present invention is to allow copying of a resident program on a programmable switch and easy duplication of the same on other switches.

These and other objects are achieved by the present invention by providing a programmable switch according to claim 1.

It is understood that the appended claims form an integral part of the technical teachings provided herein in the present description of the invention.

### Brief Description of the Drawings

Further features and advantages of the present invention will become more apparent from the ensuing detailed description, given merely by way of non-limiting example, with reference to the annexed drawings, in which:
- Figure 1 is a block diagram of an embodiment of a programmable switch according to the present invention; and
- Figure 2 is a perspective view of an embodiment of the printed circuit board with integrated antenna of a programmable switch according to the present invention.

### Description of Preferred Embodiments

Referring to the Figures, there is illustrated an exemplary embodiment of a programmable switch for use in electrical equipments and a method for programming the same.

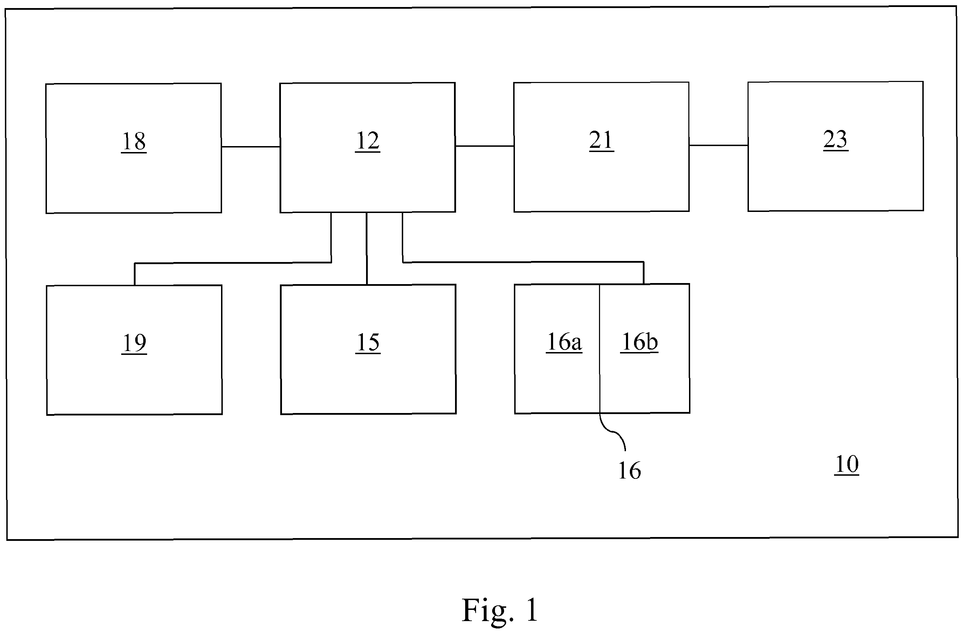

Referring to Figure 1, the programmable switch according to the invention, designated as a whole by reference numeral 10, comprises an electronic microcontroller 12 associated, preferably electrically connected, to a storage unit 15, that can be either internal or external to the microcontroller itself, to a communication module of the NFC ("Near Field Communication") type 16, to a programming interface 18 and to a display 19. The programmable switch 10 is further provided with a switch 21 for controlling the opening and closing of an electrical circuit, wherein said switch may preferably comprise a relay 23 which is connected to the supply circuit of the utility or utilities the switching on/off of which is to be controlled by means of the switch.

The switch 10 is programmable both through the interface 18 and through the NFC communication module 16 with which it is provided.

The known interface 18, for example of the type provided with buttons, having a touch-screen and a joystick, allows the loading of data by an operator into the storage unit 15.

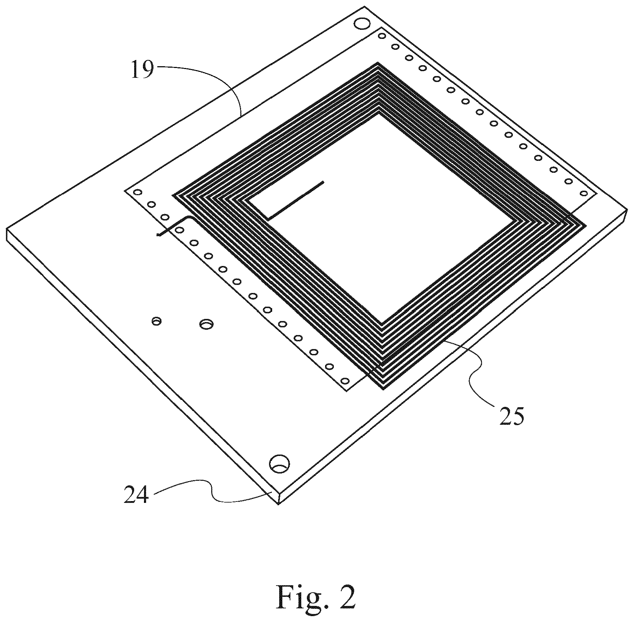

The NFC communication module 16 of the programmable switch 10 according to the invention comprises a wireless communication module 16a which integrates an antenna 25 shown in Figure 2, and an NFC memory buffer 16b, which can be written and/or read both by the electronic microcontroller 12 and by an external device, for instance a smartphone, this too being provided with an NFC communication module.

The electronic microcontroller 12 is programmed by means of suitable instructions so as to properly read the data loaded in the storage unit 15, which can be loaded through the interface 18 or through the NFC memory buffer 16b, as will be explained in more detail below.

The programmable switch 10 of the invention further comprises a printed circuit board 24, shown in Figure 2, to which the display 19, the electronic microcontroller 12, the storage unit 15, the NFC communication module 16 and the programming interface 18 are connected.

The printed circuit board 24 is preferably a multilayer circuit and comprises the antenna 25 of the NFC communication module 16.

The antenna 25 is made in a known manner preferably in the form of a squared spiral, with the inner diagonal proportional to the transmission distance.

Preferably, in order to facilitate transmission, the antenna 25 is arranged close, and preferably as close as possible, to the upper side of the printed circuit board 24, which is arranged in proximity to the outward-facing side of the printed circuit board 24 of the switch 10, when the switch 10 is installed, so as to allow the external device provided with NFC communication module to be brought close to the antenna for programming the switch 10.

According to the invention, usable for example when there are no space limitations, the antenna 25 is arranged on the upper side of the printed circuit board 24, at the side of the display.

In an alternative embodiment of the switch 10, not forming part of the invention, in which it is desired to provide a small-sized switch, the antenna 25 is formed in an inner layer of a multilayer circuit, preferably in the layer immediately below the upper side on which the display 19 is mounted.

In an alternative embodiment of the switch 10 according to the invention, the antenna is a radial inductor of known type having a suitable value.

The operation of the programmable switch 10 according to the invention is as follows.

An NFC module contained in an external device of the switch 10, for instance contained in a smartphone, is put in communication with the wireless communication module 16a of the programmable switch 10 by means of an application "APP" installed on the smartphone and writing data, for example date, time, geographical position, programmed switch-on or switch-off time, in certain sectors of the NFC memory buffer 16b; the electronic microcontroller 12 processes the data stored in the NFC memory buffer 16b and updates the data stored in the storage unit 15 connected thereto by means of serial or parallel communication.

The electronic microcontroller 12 periodically checks the presence of a data update command, activated through the smartphone application, in the NFC memory buffer 16b. When the microcontroller 12 finds the data update command, the microcontroller interprets the command and updates the internal memory 15, adapts the operation mode of the programmable switch 10 to one of the operation modes provided (daily or weekly, manual or automatic etc.), and compiles a return buffer provided in the NFC communication module 16 for the APP containing information about carried out operations (programming, localizing, recording, copying, reading etc.) so that the smartphone can read it.

Each parameter varied by the programming interface 18 compiles the return buffer of the NFC communication module 16 for the APP.

Preferably, the device arranged externally to the switch 10, for example the smartphone, transfers the data to the NFC memory buffer 16b without the need for additional energy, and therefore also when the switch is disconnected from the power network and has no battery or when the battery is flat.

During the programming step on the APP it is possible to avoid manual setting of the date, time and geographical position data by exploiting the values present on the smartphone itself thanks to its connection to the power network and to the inbuilt GPS sensor. These are the last data that are taken by the APP before starting writing the NFC memory buffer 16b, so as to minimize the synchronization error.

It is as well possible, when it is desired to program devices intended for being installed in locations having different geographical positions and possibly different time zones, to manually set such data or have them re-calculated by the APP itself.

Advantageously, the programmable switch 10 according to the present invention allows to effect recording, on a database managed by said dedicated APP, the data concerning the switch, by storing localization data, serial number, installation date, any re-programmings, thus allowing to make a "history" of the programmable switch available to the manufacturing company, such history being usable for purposes of activation and product warranty check, traceability, maintenance forecasting (for instance for replacing the back-up battery) etc..

A further advantage of the programmable switch 10 according to the present invention lies in the fact that it allows easy, quick and safe programming of the switch at the time of manufacturing and product inspection.

Ad advantage of the programmable switch 10 according to the present invention is that it allows copying of a resident program on a programmable switch and easy duplication of the same on other switches.

A further advantage of the programmable switch 10 according to the present invention is the following: owing to the little energy that the NFC chip can receive from the transmission by the smartphone, it can transfer stored data without the need for additional energy, even when the switch is disconnected from the power network or has not battery or the battery is flat.

Of course, embodiments and embodiment details may be widely varied with respect to what has been described and illustrated merely as a non-limiting example, without departing from the scope of the present invention as defined in the appended claims.

## Claims

1. Programmable switch (10) comprising:
- a storage unit (15);
- a programming interface (18);
- a display (19);
- an electronic microcontroller (12) associated to the storage unit (15), to the programming interface (18) and to the display (19);
- a switch (21) for controlling the opening and closing of an electrical circuit connected thereto;
wherein the programmable switch (10) comprises an NFC communication module (16) associated to said electronic microcontroller (12), and in that the switch (10) is programmable by loading data into the storage unit (15) by using both the programming interface (18) and the NFC communication module (16), wherein the NFC communication module (16) comprises a wireless communication module (16a) which integrates an antenna (25), and an NFC memory buffer (16b) adapted to be written and/or read by both the electronic microcontroller (12) and an external device equipped with an NFC communication module, wherein the switch further comprises a printed circuit board (24) to which the display (19), the electronic microcontroller (12), the storage unit (15), the NFC communication module (16) and the programming interface (18) are connected, wherein said printed circuit board (24) is a multilayer circuit and comprises the antenna (25) of the NFC communication module (16), wherein the antenna (25) is arranged on the upper side of the printed circuit board (24) arranged in proximity to the face of the switch (10) that faces to the outside when the switch (10) is installed, at the side of the display (19), so as to allow the external device provided with NFC communication module to be brought close to the antenna (25) for programming the switch (10),
wherein the antenna (25) is made in the form of a squared spiral, with the inner diagonal proportional to the transmission distance,
wherein the electronic microcontroller (12) is configured to periodically check the presence of a data update command in the NFC memory buffer (16b), said data update command being activated through a smartphone application running on the external device, and wherein the electronic microcontroller (12) is further configured, when a data update command is found, to interpret the command and update the storage unit (15), to adapt the operation mode of the switch (10) to one of the operation modes provided, and to compile a return buffer provided in the NFC communication module (16) containing information about carried out operations so that the external device can read it,
wherein the microcontroller is further configured to compile the return buffer of the NFC communication module (16) upon variation of any parameter by means of the programming interface (18).

2. Programmable switch (10) according to claim 1, **characterized in that** the antenna is a radial inductor.

3. Switch according to claim 1 or 2, wherein the electronic microcontroller (12) is programmed by means of suitable instructions so as to properly read the data loaded in the storage unit (15), which can be loaded through the interface (18) or through the NFC memory buffer (16b).

4. Programmable switch according to any one of the preceding claims, wherein said storage unit (15) is internal to the microcontroller itself.

5. Programmable switch according to any one of the claims 1 to 3, wherein said storage unit (15) is external to the microcontroller itself.

6. Programmable switch according to any one of the preceding claims, wherein the switch (21) comprises a relay (23) which is arranged to be connected to a supply circuit of a utility or utilities the switching on/off of which is to be controlled by means of the switch.

7. Programmable switch according to any one of the preceding claims, wherein the programming interface (18) comprises buttons, a touch-screen or a joystick.

## Patentansprüche

1. Programmierbarer Schalter (10) mit:
- einer Speichereinheit (15),
- einer Programmierschnittstelle (18),
- einer Anzeige (19),
- einem elektronischen Mikrokontroller (12), welcher der Speichereinheit (15), der Programmierschnittstelle (18) und der Anzeige (19) zugeordnet ist,
- einem Schalter (21) zum Steuern des Öffnens und Schließens eines daran angeschlossenen elektrischen Schaltkreises,
wobei der programmierbare Schalter (10) ein NFC-Kommunikationsmodul (16) aufweist, das dem elektronischen Mikrokontroller (12) zugeordnet ist und der Schalter (10) programmierbar ist, indem Daten durch Verwendung der Programmierschnittstelle (18) und des NFC-Kommunikationsmoduls (16) in die Speichereinheit (15) geschrieben werden, wobei das NFC Kommunikationsmodul (16) ein drahtloses Kommunikationsmodul (16a), das eine Antenne (25) aufweist, und einen NFC-Zwischenspeicher (16b), der dafür ausgelegt ist, sowohl von dem elektronischen Mikrokontroller (12) als auch einem externen Gerät, das mit einem NFC-Kommunikationsmodul ausgerüstet ist, beschrieben und/oder ausgelesen zu werden, aufweist, wobei der Schalter zudem eine bedruckte Leiterplatte (24) aufweist, an welche die Anzeige (19), der elektronische Mikrokontroller (12), die Speichereinheit (15), das NFC-Kommunikationsmodul (16) und die Programmierschnittstelle (18) angeschlossen sind, wobei die gedruckte Leiterplatte (24) ein mehrlagiger Schaltkreis ist und die Antenne (25) des NFC-Kommunikationsmoduls (16) aufweist, wobei die Antenne (25), an der Oberseite der gedruckten Leiterplatte (24) in der Nähe der Seite des Schalters (10), die der Außenseite zugewandt ist, wenn der Schalter (10) installiert ist, an der Seite der Anzeige (19) angeordnet ist, sodass das externe Gerät, das mit einem NFC-Kommunikationsmodul versehen ist, zum Programmieren des Schalters (10), in die Nähe der Antenne (25) gebracht werden kann,
wobei die Antenne (25) in Form einer quadratischen Spirale ausgebildet ist, wobei die innere Diagonale proportional zur Übertragungsreichweite ist, wobei der elektronische Mikrokontroller (12) dafür eingerichtet ist, periodisch die Anwesenheit eines Datenupdatebefehls in dem NFC-Zwischenspeicher (16b) zu prüfen, wobei der Datenupdatebefehl durch eine Smartphoneanwendung aktiviert wird, die auf dem externen Gerät läuft, und wobei der elektronische Mikrokontroller (12) zudem dafür eingerichtet ist, bei Auffinden eines Datenupdatebefehls den Befehl zu übersetzen und die Speichereinheit (15) aufzufrischen, um den Betriebsmodus des Schalters (10) an einen der bereitgestellten Betriebsmoden anzupassen und einen in dem NFC-Kommunikationsmodul (16) vorgesehen Rückgabezwischenspeicher, der Informationen über ausgeführte Operationen enthält, zu kompilieren, so dass das externe Gerät diese lesen kann, wobei der Mikrokontroller zudem dafür eingerichtet ist, den Rückgabezwischenspeicher des NFC-Kommunikationsmoduls (16) bei Variationen eines Parameters mittels der Programmierschnittstelle (18) zu kompilieren.

2. Programmierbarer Schalter (10) nach Anspruch 1, **dadurch gekennzeichnet, dass** die Antenne ein radialer Induktor ist.

3. Schalter nach Anspruch 1 oder 2, wobei der elektronische Mikrokontroller (12) mittels geeigneter Instruktionen programmiert ist, um in die Speichereinheit (15) geschriebene Daten korrekt zu lesen, die über die Schnittstelle (18) oder den NFC-Speicherpuffer (16b) geladen werden können.

4. Programmierbarer Schalter nach einem der vorstehenden Ansprüche, wobei die Speichereinheit (15) in dem Mikrokontroller selbst ist.

5. Programmierbarer Schalter nach einem der Ansprüche 1 bis 3, wobei die Speichereinheit (15) außerhalb von dem Mikrokontroller ist.

6. Programmierbarer Schalter nach einem der vorstehenden Ansprüche, wobei der Schalter (21) ein Relais (23) aufweist, das dafür vorgesehen ist, an den Versorgungskreis eines oder mehrerer Hilfsmittel angeschlossen zu werden, deren An- oder Abschalten durch den Schalter kontrolliert werden soll.

7. Programmierbarer Schalter nach einem der vorstehenden Ansprüche, wobei die programmierbare Schnittstelle Knöpfe, einen Sensorbildschirm oder einen Steuerknüppel aufweist.

## Revendications

1. Commutateur programmable (10) comprenant :
- une unité de stockage (15) ;
- une interface de programmation (18) ;
- un afficheur (19) ;
- un microcontrôleur électronique (12) associé à l'unité de stockage (15), à l'interface de programmation (18) et à l'afficheur (19) ;
- un commutateur (21) permettant de contrôler l'ouverture et la fermeture d'un circuit électrique qui lui est connecté ;
dans lequel le commutateur programmable (10) comprend un module de communication NFC (16) associé audit microcontrôleur électronique (12), et en ce que le commutateur (10) est programmable par chargement de données dans l'unité de stockage (15) en utilisant à la fois l'interface de programmation (18) et le module de communication NFC (16), dans lequel le module de communication NFC (16) comprend un module de communication sans fil (16a) qui intègre une antenne (25) et une mémoire tampon NFC (16b) adaptée pour être écrite et/ou lue à la fois par le microcontrôleur électronique (12) et un dispositif extérieur équipé d'un module de communication NFC, dans lequel
le commutateur comprend en outre une carte de circuit imprimé (24) à laquelle sont connectés l'afficheur (19), le microcontrôleur électronique (12), l'unité de stockage (15), le module de communication NFC (16) et l'interface de programmation (18), dans lequel ladite carte de circuit imprimé (24) est un circuit multicouche et comprend l'antenne (25) du module de communication NFC (16), dans lequel l'antenne (25) est agencée sur le côté supérieur de la carte de circuit imprimé (24) agencée à proximité de la face du commutateur (10) qui est tournée vers l'extérieur lorsque le commutateur (10) est installé, sur le côté de l'afficheur (19), de manière à pouvoir rapprocher le dispositif extérieur muni du module de communication NFC de l'antenne (25) pour la programmation du commutateur (10),
dans lequel l'antenne (25) est réalisée sous la forme d'une spirale carrée, dont la diagonale interne est proportionnelle à la distance de transmission,
dans lequel le microcontrôleur électronique (12) est configuré pour vérifier périodiquement la présence d'une commande de mise à jour de données dans la mémoire tampon NFC (16b), ladite commande de mise à jour de données étant activée par l'intermédiaire d'une application de téléphone intelligent fonctionnant sur le dispositif extérieur, et dans lequel le microcontrôleur électronique (12) est en outre configuré, lorsqu'une commande de mise à jour de données est trouvée, pour interpréter la commande et mettre à jour l'unité de stockage (15), pour adapter le mode de fonctionnement du commutateur (10) à l'un des modes de fonctionnement prévus, et pour compiler une mémoire tampon de retour prévue dans le module de communication NFC (16) contenant des informations sur des opérations effectuées, de sorte que le dispositif extérieur puisse les lire,
dans lequel le microcontrôleur est en outre configuré pour compiler la mémoire tampon de retour du module de communication NFC (16) lors d'une variation d'un paramètre quelconque au moyen de l'interface de programmation (18).

2. Commutateur programmable (10) selon la revendication 1, **caractérisé en ce que** l'antenne est un inducteur radial.

3. Commutateur selon la revendication 1 ou 2, dans lequel le microcontrôleur électronique (12) est programmé au moyen d'instructions convenables de manière à lire correctement les données chargées dans l'unité de stockage (15), qui peuvent être chargées par l'interface (18) ou par la mémoire tampon NFC (16b).

4. Commutateur programmable selon l'une quelconque des revendications précédentes, dans lequel ladite unité de stockage (15) est intérieure au microcontrôleur lui-même.

5. Commutateur programmable selon l'une quelconque des revendications 1 à 3, dans lequel ladite unité de stockage (15) est extérieure au microcontrôleur lui-même.

6. Commutateur programmable selon l'une quelconque des revendications précédentes, dans lequel le commutateur (21) comprend un relais (23) qui est agencé pour être connecté au circuit d'alimentation d'une installation ou d'installations dont la mise en marche et l'arrêt doivent être contrôlés au moyen du commutateur.

7. Commutateur programmable selon l'une quelconque des revendications précédentes, dans lequel l'interface de programmation (18) comprend des boutons, un écran tactile ou un manche à balai.
